# EUROPEAN PATENT SPECIFICATION

(11) **EP 1 860 561 B1**
(45) Date of publication and mention of the grant of the patent: **20.01.2010**
(21) Application number: 07010177.9
(22) Date of filing: 22.05.2007
(51) Int. Cl.: G06F 11/14, G06K 17/00

(54) **Method of and apparatus for backing up data and method of and apparatus for restoring data in data management system**
Verfahren und Vorrichtung zur Datensicherung sowie Verfahren und Vorrichtung zur Datenherstellung in einem Datenverwaltungssystem
Procédé et appareil de sauvegarde de données et procédé et appareil de restauration de données dans un système de gestion de données

(30) Priority: 24.05.2006 JP 2006143651
(43) Date of publication of application: 28.11.2007
(73) Proprietor: FUJIFILM Corporation, Minato-ku Tokyo 106-8620 (JP)
(72) Inventor: Ishikawa, Akio, Fujinomiya-shi Shizuoka 418-8666 (JP); Nagashima, Fumihiko, Fujinomiya-shi Shizuoka 418-8666 (JP)
(74) Representative: HOFFMANN EITLE

(56) References cited:
- GB-A- 2 386 719
- US-A- 5 761 404
- US-A1- 2006 045 387

## Description

### BACKGROUND OF THE INVENTION

### Field of the Invention:

The present invention relates to a method of and an apparatus for backing up data in a data management system for managing image data in a manner to allow the image data to be retrieved according to attribute data related thereto. Description of the Related Art:

Heretofore, there has been developed a system for reading a number of design drawings, specifications, etc. using a scanner, storing the read data as digital data in a mass storage unit such as a hard disk, a CD-ROM, a DVD, or the like, setting retrieval conditions when necessary, retrieving a desired design drawing, etc. according to the set retrieval conditions, and displaying or outputting the retrieved design drawing, etc.

Recent rapid technological innovations have resulted in frequent changes of data formats for storage mediums for storing image data and also in frequent changes of operating systems. If the data format for certain storage mediums has been changed, but the data format of past image data that have already been stored in those storage mediums has not been converted yet in time, then the past image data stored in those storage mediums may not be restored.

Also, storage mediums in general are vulnerable to data loss due to aging and data crash. Therefore, it is essential for safe data management to employ a backup storage system for distributing and storing important data in a plurality of storage mediums. The backup storage system also needs a lot of work for format conversion for the past data that have been stored because it has to take into account changes in the data format and the operating system for the stored data.

One simple method of backing up image data is to record and save design drawings, etc. in a visualized image format on microfilms. Microfilms can be expected to be kept for about 500 years under appropriate conditions. Microfilmed data are not only secure from data format changes, but also protected against aging-induced data loss due to aging.

For easy retrieval of images recorded on microfilms, Japanese Laid-Open Patent Publication No. 4-31841 discloses an image capturing apparatus for recording code information in the form of characters, numerals, etc. representing the recording date of an image, the contents of the image, and an error that occurred when the image was recorded, in the vicinity of the image recorded on a microfilm.

The disclosed image capturing apparatus serves to capture the images of bills, checks, capital stock certificates, etc. and records the captured images on microfilms, and is not intended to record image data already saved as electronic data on microfilms.

For recording code information, which is related to images to be recorded on microfilms, together with the images on the microfilms, the disclosed image capturing apparatus requires a great deal of labor to enter the code information prior to the recording thereof. In addition, the disclosed image capturing apparatus does not take into account the restoration of attribute data related to image data, and fails to deal sufficiently with situations where it is difficult to restore design drawings, specifications, etc. in the form of electronic data saved in storage mediums.

GB-A-2 386 719 discloses a digital preservation system for accepting a digital data record as input, for providing a preview of the digital data record on a display screen, for writing the data record in human-readable form onto a preservation-quality medium, for storage of the medium, and for retrieval of the data record from the medium. The digital preservation system preserves a data record in human-readable form, along with an associated metadata record, allowing the human-readable preserved data record to be readable in the distant future, independent of specific reading hardware. The preview function allows an operator to specify storage and retrieval characteristics for the data record.

US 2006/0045387 Al discloses a method and apparatus which are provided for preserving binary data on an analog archival medium, such as microfilm, in which the binary data is encoded, such as in a barcode symbol, in accordance with a predefined encoding specification. The predefined encoding specification may be stored along with the binary data to facilitate subsequent recovery of the binary data, even if the encoding technique has become obsolete. Error detection and correction code may be generated for the binary data and stored along therewith. By comparing the error correction code associated with the original binary data with an error correction code generated based upon the recovered data, the accuracy of the recovered data may be confirmed. Corresponding methods and apparatus for recovering the binary data are also provided.

US 5,761,404 discloses an image-data managing apparatus for a work-flow system, wherein image data transmitted from a server are updated sequentially by a plurality of clients, a temporary storage for temporarily storing data being updated is provided in each client, and an image database, an image-data storage device, a work-flow managing unit, and a recovery-state managing unit are provided in the server. When a failure occurs in the image-data managing apparatus and the recovery of image data is requested, the recovery-state managing unit extracts control information from the work-flow managing unit, which control information indicates whether or not image data are preserved in the temporary storage or the image-data storage device in the course of update processing, thereby executing a function for identifying image data to be retrieved.

### SUMMARY OF THE INVENTION

According to the present invention, there is provided an apparatus for backing up data in a data management system for managing image data in a manner to allow the image data to be retrieved according to attribute data related thereto as set out in Claim 1.

The present invention also provides a method of backing up data in a data management system for managing image data in a manner to allow the image data to be retrieved according to attribute data related thereto as set out in Claim 5.

Optional features are set out in the other claims.

An embodiment of the present invention provides a method of and an apparatus for backing up data in a data management system which is capable of easily recording and saving all image data and attribute data thereof on microfilms and of easily and reliably restoring the recorded data from the microfilms, as the need arises.

An embodiment of the present invention provides a method of and an apparatus for backing up data in a data management system which is capable of recording and saving image data independently of data formats and operating systems thereof.

An embodiment of the present invention provides a method of and an apparatus for backing up data in a data management system which is capable of saving image data for a long period of time.

The following description in conjunction with the accompanying drawings describes a preferred embodiment of the present invention by way of illustrative example.

### BRIEF DESCRIPTION OF THE DRAWINGS

FIG. 1 is a block diagram showing the entire of a drawing management system according to an embodiment of the present invention;
FIG. 2 is a functional block diagram of essential units of the drawing management system according to the embodiment of the present invention;
FIG. 3 is a flowchart of a drawing number booking process, a drawing registering process, and a drawing saving process;
FIG. 4 is a flowchart of a drawing retrieving process;
FIG. 5 is a view of a menu screen displayed on a monitor of a drawing retrieving unit;
FIG. 6 is a view of a drawing number booking screen displayed on the monitor of the drawing retrieving unit;
FIG. 7 is a view of a drawing attribute data registering screen displayed on the monitor of the drawing retrieving unit;
FIG. 8 is a view of a new drawing registering screen displayed on the monitor of the drawing retrieving unit;
FIG. 9 is a view of a registration request slip generated by the drawing retrieving unit;
FIG. 10 is a view of a drawing;
FIG. 11 is a view of a bundle of drawings;
FIG. 12 is a view of a retrieval condition input screen displayed on the monitor of the drawing retrieving unit;
FIG. 13 is a view of a drawing retrieval result screen displayed on the monitor of the drawing retrieving unit;
FIG. 14 is a view of a drawing retrieval result screen including a compressed drawing displayed on the monitor of the drawing retrieving unit;
FIG. 15 is a diagram showing how compressed drawings are scrolled;
FIG. 16 is a view of a drawing retrieval result screen showing an actual drawing displayed on the monitor of the drawing retrieving unit;
FIG. 17 is a view of a retrieval condition input screen displayed on the monitor of the drawing retrieving unit;
FIG. 18 is a view of a complete report list display screen displayed on the monitor of the drawing retrieving unit;
FIG. 19 is a flowchart of a processing sequence for saving image data and attribute data related thereto on a microfilm;
FIG. 20 is a diagram showing data-saving folders that are generated when data are to be saved on a microfilm; and
FIG. 21 is a view showing information recorded in recording frames on a microfilm.

### DESCRIPTION OF THE PREFERRED EMBODIMENT

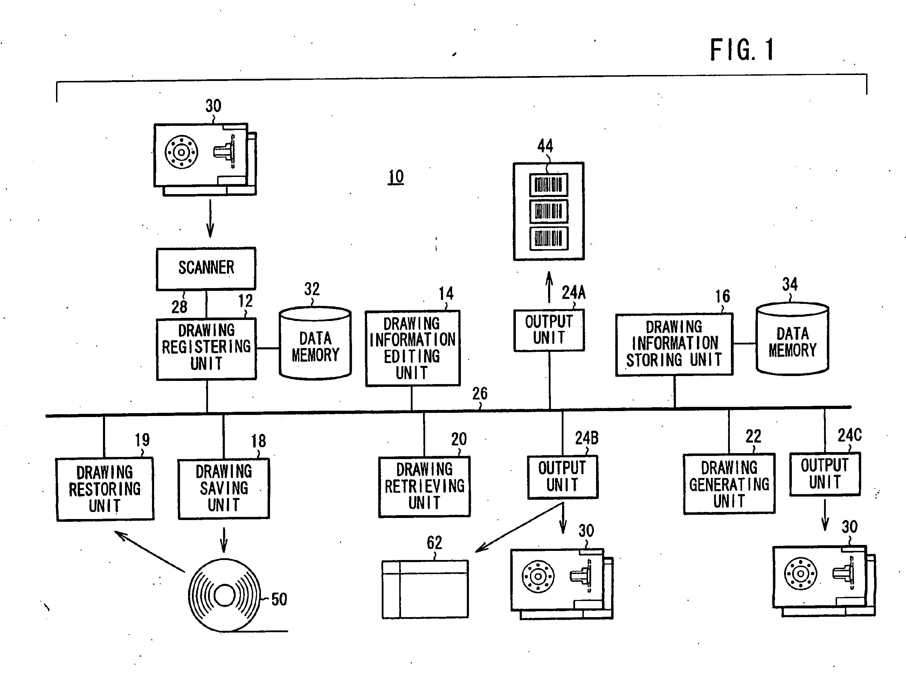

FIG. 1 shows in block-form a drawing management system 10 according to an embodiment of the present invention which incorporates an apparatus for backing up data and an apparatus for restoring data in a data management system.

As shown in FIG. 1, the drawing management system 10 comprises a drawing registering unit 12, a drawing information editing unit 14, a drawing information storing unit 16, a drawing saving unit 18, a drawing restoring unit 19, a drawing retrieving unit 20, a drawing generating unit 22, and output units 24A, 24B, 24C which are connected to each other by a network 26.

The drawing registering unit 12 reads drawings 30 using a scanner 28 connected thereto and registers into a data memory 32 actual drawing image data Dorg that are not compressed by deflate or the like. The data memory 32 stores the actual drawing image data Dorg and drawing attribute data Datt edited by the drawing information editing unit 14 in relation to the actual drawing image data Dorg.

The drawings 30 include not only paper drawings such as structure and circuit drawings of instruments and facilities, but also images of all paper documents such as inspection, calculation, and estimation documents about facility construction works. The drawing attribute data Datt, which will be described in greater detail later, include data representing ID numbers and titles of the drawings 30, department information about departments and lines corresponding to the drawings 30, dates on which the drawings 30 were generated, and persons in charge of the drawings 30.

The drawing information editing unit 14 controls the drawing registering unit 12 to register and edit the drawings 30, and also controls the drawing information storing unit 16 to store various data including the actual drawing image data Dorg and the drawing attribute data Datt into a data memory 34 connected to the drawing information storing unit 16.

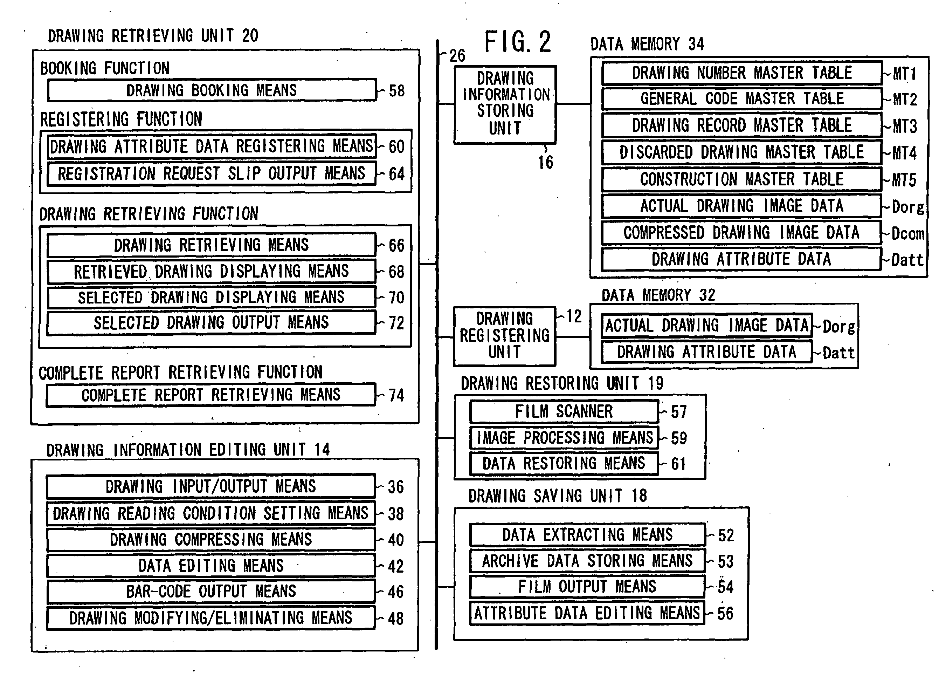

As shown in FIG. 2, the drawing information editing unit 14 has a drawing input/output means 36 for inputting actual drawing image data Dorg and drawing attribute data Datt to and outputting them from the data memory 32 connected to the drawing registering unit 12, a drawing reading condition setting means 38 for setting general drawing reading conditions about the scanner 28 which include a resolution, a reading size, a reading direction, etc. for reading drawings 30, a drawing compressing means 40 for compressing, e.g., deflating, actual drawing image data Dorg of a drawing 30 that has been read to generate compressed drawing image data Dcom, a data editing means 42 for editing various data, a bar-code output means 46 for printing, with the output unit 24A, bar codes 44 (see FIG. 1) for identifying the ID numbers of the drawings 30, and a drawing modifying/eliminating means 48 for modifying or eliminating drawings 30 that have already been registered.

The data edited by the data editing means 42 include, in addition to the actual drawing image data Dorg, the compressed drawing image data Dcom, and the drawing attribute data Datt, a drawing number master table MT1, a general code master table MT2, a drawing record master table MT3, a discarded drawing master table MT4, a construction master table MT5. These data are stored in the data memory 34 connected to the drawing information storing unit 16.

The drawing number master table MT1 is a management table for setting drawing numbers for the drawings 30 with no number overlaps, and stores drawing booking data including drawing numbers prior to the registration of drawings. The general code master table MT2 is a management table for storing keywords for setting and retrieving drawing attribute data Datt, and stores, as keywords, the types of drawings 30 to be registered, the names of persons in charge of drawings 30, and department information corresponding to drawings 30. The drawing record master table MT3 stores information as to old drawings that have been modified or eliminated. The discarded drawing master table MT4 stores information as to discarded drawings 30. The construction master table MT5 stores construction information representing construction works that have used drawings 30.

The drawing saving unit 18 is a unit for saving visualized drawings 30 based on actual drawing image data Dorg in an image format on a microfilm 50 by way of a CD-ROM or the like, and also saving drawing attribute data Datt related to the actual drawing image data Dorg in a restorable visualized code format on the microfilm 50.

The drawing saving unit 18 comprises a data extracting means 52 for extracting actual drawing image data Dorg and drawing attribute data Datt of drawings 30 which have not yet saved on the microfilm 50, based on a microfilm (MF) storage flag, an archive data storing means 53 in the form of a storage medium such as a CD-ROM or the like for storing the extracted data as archive data, a film output means 54 (data recording means) for outputting the archive data stored by the archive data storing means 53 in visualized image and code formats to the microfilm 50, and an attribute data editing means 56 for editing the drawing attribute data Datt including the MF storage flag when the archive data are to be output to the microfilm 50.

The drawing restoring unit 19 is a unit for restoring actual drawing image data Dorg and drawing attribute data Datt from the information recorded on the microfilm 50. The drawing restoring unit 19 comprises a film scanner 57 for reading the information recorded on the microfilm 50, an image processing means 59 for processing the read information for edge emphasis, noise removal, etc., and a data restoring means 61 in the form of analyzing software such as OCR (Optical Character Reader) software, for example, for restoring drawing attribute data Datt from the processed information.

The drawing retrieving unit 20 is a computer assigned to each operator who wants drawings 30 to be registered. The drawing retrieving unit 20 has a booking function for booking the registration of a drawing 30, a registering function to register drawing attribute data Datt based on drawing booking data and generate a registration request slip, a drawing retrieving function to retrieve a desired drawing 30, and a complete report retrieving function to retrieve a complete report which is a construction work report made up of a plurality of registered drawings 30.

The booking function has a drawing booking means 58 for booking, in advance, the drawing number of a drawing 30 to be registered with no number overlaps, using the drawing number master table MT1 stored in the data memory 34.

The registering function has a drawing attribute data registering means 60 for registering drawing attribute data Datt of a drawing 30 based on a drawing number already booked by the drawing booking means 58, and a registration request slip output means 64 for outputting a registration request slip 62 (see FIG. 1) from the output unit 24B based on the registered drawing attribute data Datt. The registration request slip 62 is provided, together with, the drawing 30 to be registered, to the operator of the drawing information editing unit 14 for asking the operator to register the drawing 30.

The drawing retrieving function has a drawing retrieving means 66 for setting desired drawing retrieving conditions and retrieving a drawing 30 having drawing attribute data Datt corresponding to the drawing retrieving conditions, a retrieved drawing displaying means 68 for generating the retrieved drawing 30 from compressed drawing image data Dcom and displaying the drawing 30 together with the drawing attribute data Datt, a selected drawing displaying means 70 for displaying the compressed drawing 30 displayed by the retrieved drawing displaying means 68 as an uncompressed drawing 30 using the actual drawing image data Dorg, and a selected drawing output means 72 for outputting the drawing 30 displayed by the selected drawing displaying means 70 from the output unit 24B.

The complete report retrieving function has a complete report retrieving means 74 for setting desired construction work retrieving conditions and retrieving a complete report having drawing attribute data Datt which corresponds to the construction work retrieving conditions. The retrieved complete report can be output from the output unit 24B.

The drawing generating unit 22 comprises a CAD (Computer Aided Design) unit for generating CAD data. CAD data generated by the drawing generating unit 22 are edited by the drawing information editing unit 14 and converted into actual drawing image data Dorg. The drawing attribute data Datt can be registered using the drawing retrieving unit 20.

The drawing management system 10 according to the embodiment is basically constructed as described above.

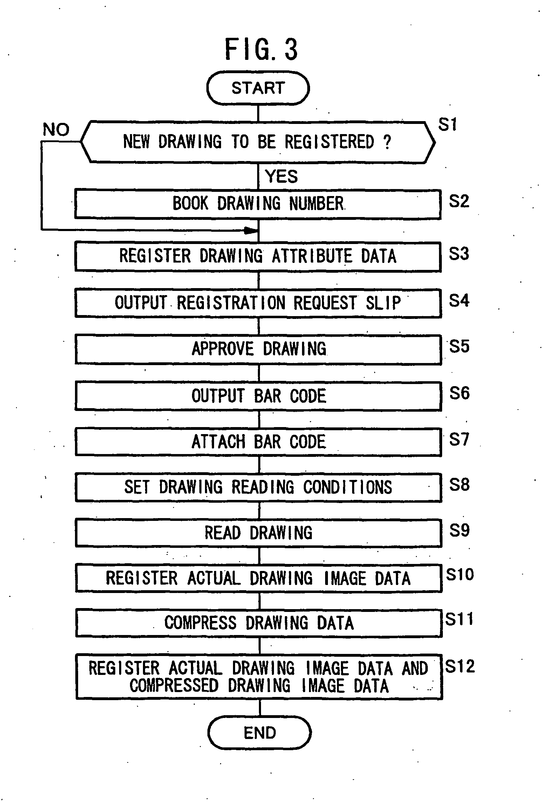

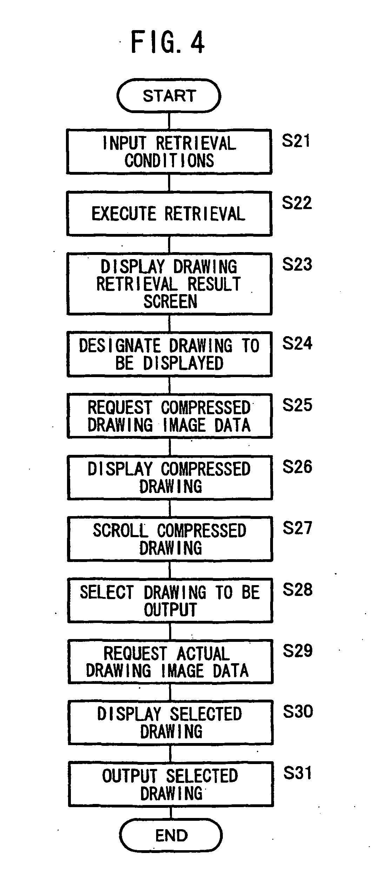

A drawing number booking process, a drawing registering process, a drawing saving process, and a drawing retrieving process which are performed by the drawing management system 10 will be described below with reference to flowcharts shown in FIGS. 3 and 4.

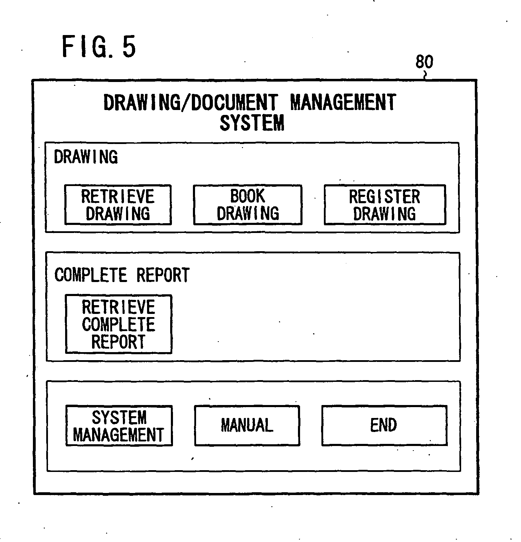

When the drawing management system 10 is activated, the monitor of the drawing retrieving unit 20 for each operator displays a menu screen 80 shown in FIG. 5.

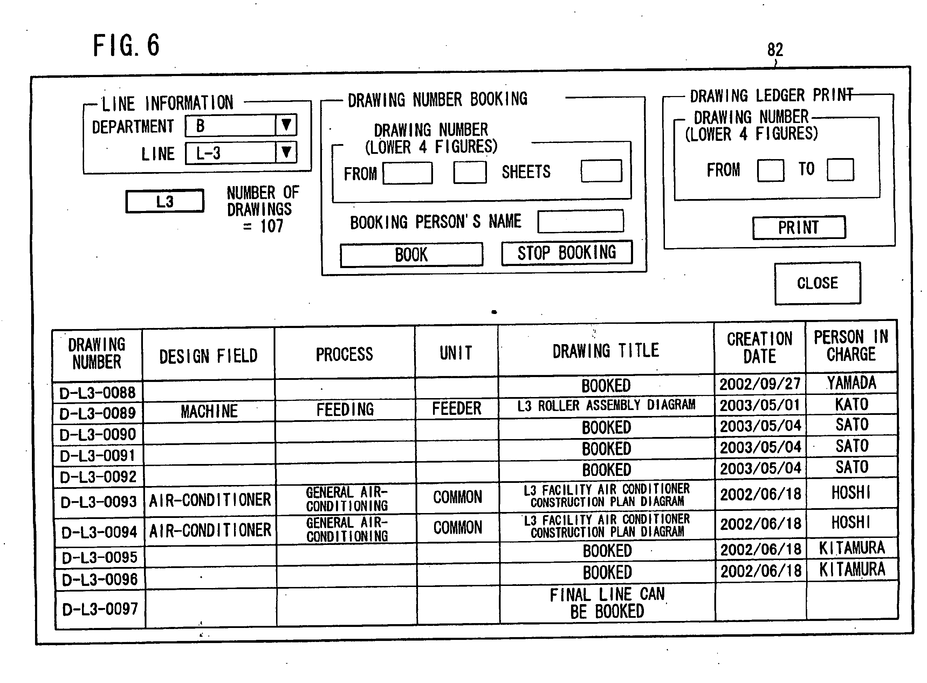

If the operator wants to register a new drawing 30 (YES in step S1), then the operator selects a "BOOK DRAWING" button on the menu screen 80. When the "BOOK DRAWING" button is selected, a drawing number booking screen 82 shown in FIG. 6 is displayed on the monitor of the drawing retrieving unit 20. The operator then books a drawing number on the drawing number booking screen 82 in step S2.

When the operator inputs the information of a department and the information of a line representative of a facility related to the drawing 30, using the information set in the general code master table MT2 stored in the data memory 34, the drawing booking means 58 displays the booking information of a drawing number at a department B and a line L3, for example, using the drawing number master table MT1 and the drawing attribute data Datt stored in the data memory 34.

The operator is unable to use a drawing number D-L3-0088, for example, already booked by another operator, because "BOOKED" is displayed in the column of drawing titles with respect to the drawing number D-L3-0088. Another drawing number D-L3-0089 is a drawing number for which a drawing 30 has already been registered because various pieces of information representing drawing attribute data Datt have been displayed in the columns of design field, process, unit, drawing title, generated date, and person in charge, with respect to the drawing number D-L3-0089. Therefore, the operator selects a drawing number other than these drawing numbers.

The operator sets as many drawing numbers that can be booked as required for registration, and enters the name of the person who has booked the drawing numbers, i.e., the name of the booking person. Then, the operator selects a "BOOK" button, whereupon the drawing number booking process is completed.

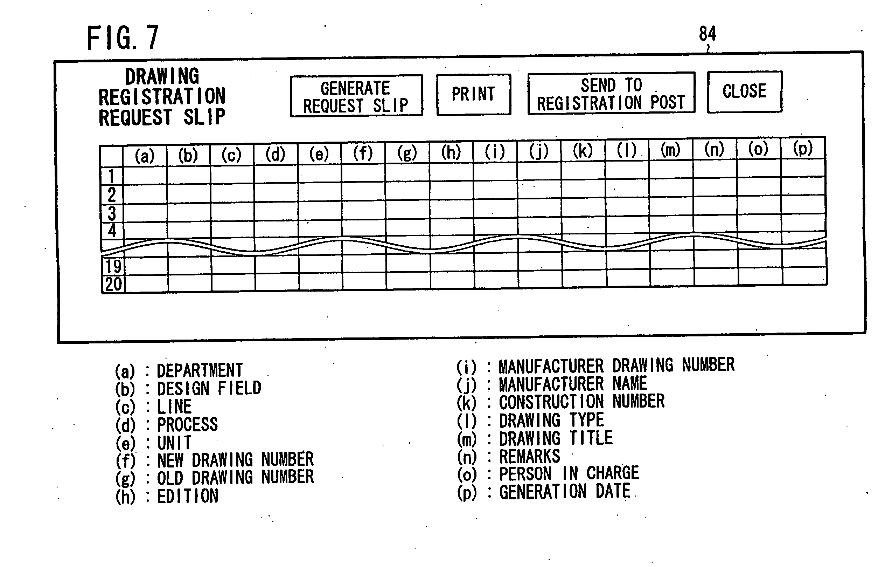

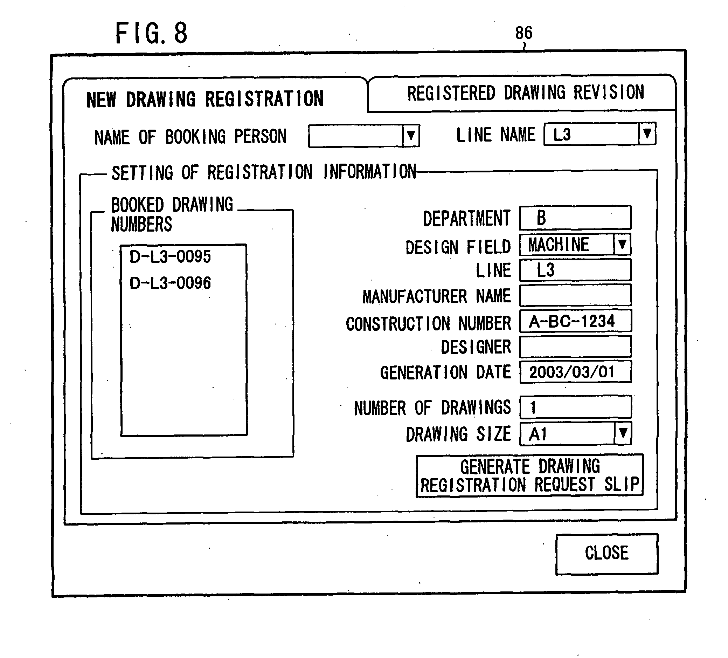

Then, the operator selects a "REGISTER DRAWING" button on the menu screen 80. The drawing attribute data registering means 60 displays a drawing attribute data registering screen 84 shown in FIG. 7, allowing the operator to register drawing attribute data in step S3. When the operator selects a "REQUEST SLIP GENERATION" button on the drawing attribute data registering screen 84, a new drawing registering screen 86 shown in FIG. 8 for registering a new drawing 30 is displayed. When the operator inputs the name of a booking person and the name of a line on the drawing registering screen 86, if drawing numbers have been booked in step S2, then the list of the drawing numbers booked by the booking person on the drawing number booking screen 82 is displayed as a list of booked drawing numbers on the drawing registering screen 86.

The operator inputs, on the drawing registering screen 86, drawing attribute data Datt including the design field, the name of the manufacturer which has generated the drawing 30, the construction work number, the designer, and the generated date of the drawing 30, the number of drawings 30, and the drawing size. The operator then selects a plurality of drawing numbers, if required, which share these drawing attribute data Datt, and selects a "DRAWING REGISTRATION REQUEST SLIP GENERATION" button. The drawing attribute data registering screen 84 shown in FIG. 7, which reflects the drawing attribute data Datt input on the drawing registering screen 86, is now displayed. The operator additionally inputs necessary drawing attribute data Datt on the displayed drawing registering screen 86.

Since the operator inputs the drawing attribute data Datt by selecting keywords registered in the general code master table MT2 stored in the data memory 34, the drawing attribute data Datt are prevented from being input in different formats depending on different operators.

If the operator has not booked any drawing number in step S2, but wants to revise an already registered drawing 30, then the operator selects a registered drawing revision tag on the drawing registering screen 86, retrieves a drawing to be revised, revises the retrieved drawing, and registers it again. The information of the old drawing 30 before revision is stored in the drawing record master table MT3.

After the operator has set the drawing attribute data Datt as described above, the operator selects a "SEND TO REGISTRATION POST" on the drawing attribute data registering screen 84. The drawing booking data are now sent to the drawing information editing unit 14.

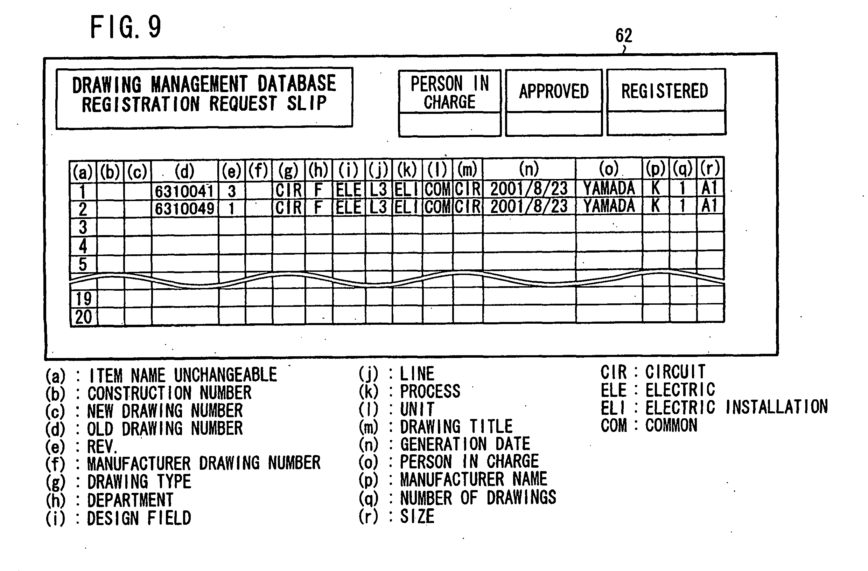

When the operator selects a "PRINT" button on the drawing attribute data registering screen 84, the registration request slip output means 64 outputs a registration request slip 62 shown in FIG. 9 from the output unit 24B in step S4.

The operator signs a person-in-charge field on the output registration request slip 62, and submits the registration request slip 62 attached to a drawing 30 to be registered, to an approver. The approver confirms the contents of the drawing 30, and signs an approver field on the registration request slip 62 in step S5.

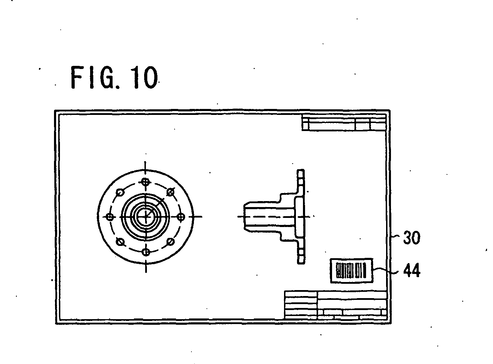

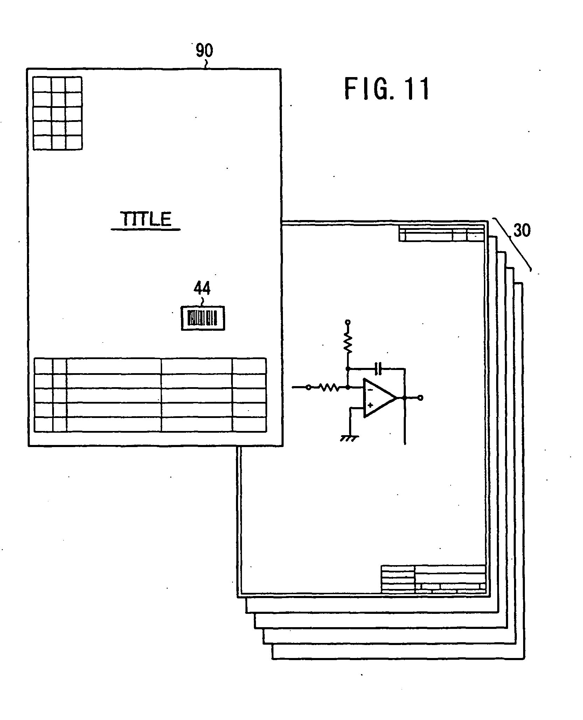

The drawing 30 that is approved by the approver is delivered to a drawing registrar, who registers the drawing 30. Before the drawing 30 is registered, the bar-code output means 46 of the drawing information editing unit 14 outputs a bar code 44 (see FIG. 10) representing an ID number set as the drawing attribute data Datt of the drawing 30 from the output unit 24A in step S6. The drawing registrar applies the bar code 44 to a given area on the drawing 30 as a corresponding single drawing in step S7, as shown in FIG. 10. If the drawing 30 comprises a bundle of drawings as a bundle of documents including circuit drawings, inspection documents, etc., then, as shown in FIG. 11, the drawing registrar adds a cover sheet 90 carrying a drawing title to the bundle of drawings, and applies the bar code 44 to the cover sheet 90.

Then, the drawing registrar compares the registration request slip 62 (see FIG. 9) attached to the drawing 30 with the drawing attribute data Datt stored as the drawing booking data in the registration post for confirmation, and starts a process of registering the drawing 30 using the drawing registering unit 12.

The drawing reading condition setting means 38 of the drawing information editing unit 14 displays on the monitor a setting screen for setting drawing reading conditions which include a resolution, a reading size, a reading direction, etc. for reading drawings 30. The drawing registrar then sets drawing reading conditions for the drawing 30 to be registered on the setting screen in step S8.

When the drawing reading conditions are set, the drawing input/output means 36 of the drawing information editing unit 14 controls the drawing registering unit 12 according to the drawing reading conditions to cause the scanner 28 to read the drawing 30 in step S9.

The drawing 30 read by the scanner 28 is registered as actual drawing image data Dorg to the data memory 32, which are uncompressed image data, together with related drawing attribute data Datt, in the data memory 32 in step S10.

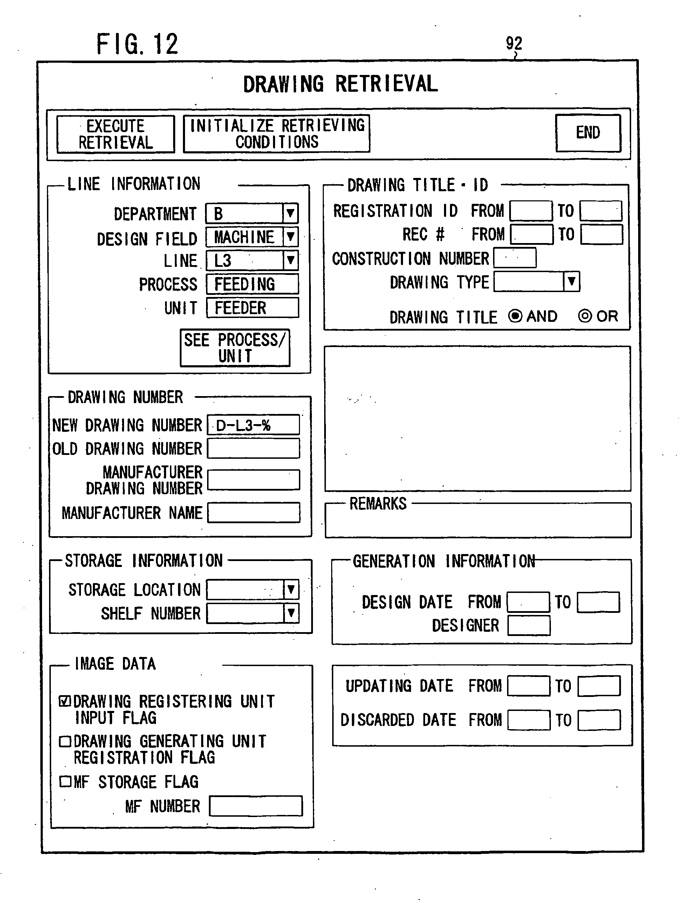

When the drawing information editing unit 14 registers the actual drawing image data Dorg, the drawing information editing unit 14 sets a drawing registering unit input flag indicating that the drawing 30 with respect to the drawing attribute data Datt has been input into the data memory 32 (see FIG. 12). After the drawing 30 has been registered, the drawing registrar signs a registration field on the registration request slip 62 (see FIG. 9), and returns the registration request slip 62 together with the drawing 30 to the person who has asked the drawing registrar to register the drawing 30.

After having registered the actual drawing image data Dorg in the data memory 32, the drawing compressing means 40 of the drawing information editing unit 14 compresses the actual drawing image data Dorg by way of deflate or the like in step S11, thereby generating compressed drawing image data Dcom. Then, the drawing input/output means 36 sends the actual drawing image data Dorg and the compressed drawing image data Dcom through the network 26 to the drawing information storing unit 16, which registers the actual drawing image data Dorg and the compressed drawing image data Dcom in the data memory 34 in step S12.

A process of retrieving a registered drawing 30 will be described below.

When a "RETRIVE DRAWING" button is selected on the menu screen 80 (see FIG. 5) displayed on the monitor of the drawing retrieving unit 20, a retrieval condition input screen 92 shown in FIG. 12 is displayed on the monitor of the drawing retrieving unit 20. The operator inputs retrieval conditions for retrieving the desired drawing 30 into the retrieval condition input screen 92 in step S21. The drawing attribute data Datt of the drawings 30 stored in the data memory 34 are used as the retrieval conditions.

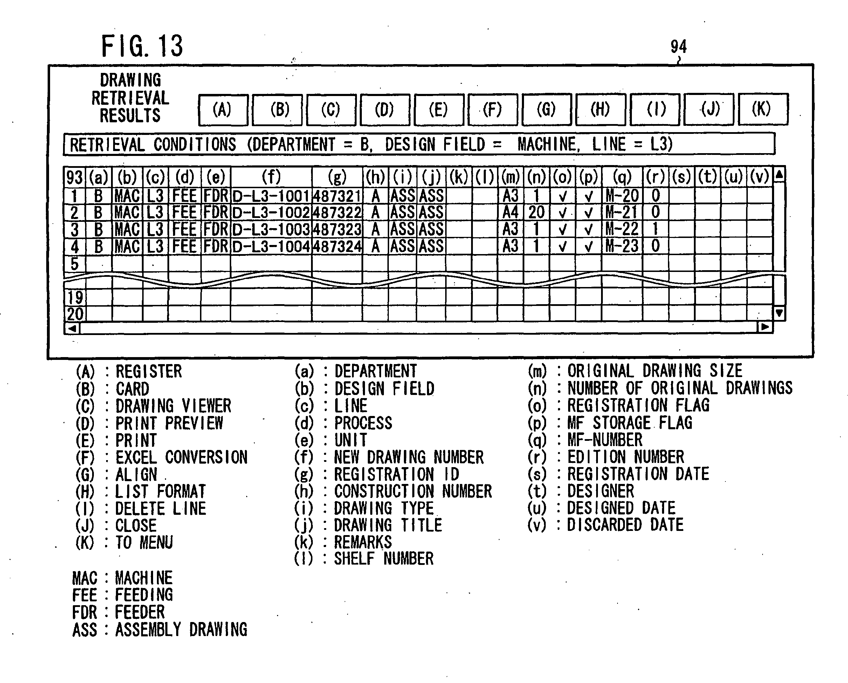

When the operator inputs the retrieval conditions and selects an "EXECUTE RETRIEVAL" button, the drawing retrieving means 66 retrieves drawing attribute data Datt which satisfy the retrieval conditions in step S22 and displays a drawing retrieval result screen 94 shown in FIG. 13 on the monitor of the drawing retrieving unit 20 in step S23. The drawing retrieval result screen 94 displays only the drawing attribute data Datt of the drawings 30 that have been retrieved.

The operator then designates desired drawing data from the drawing attribute data Datt displayed on the drawing retrieval result screen 94 in step S24. If it is difficult for the operator to narrow down to one drawing data, then the operator may designate a plurality of drawing data.

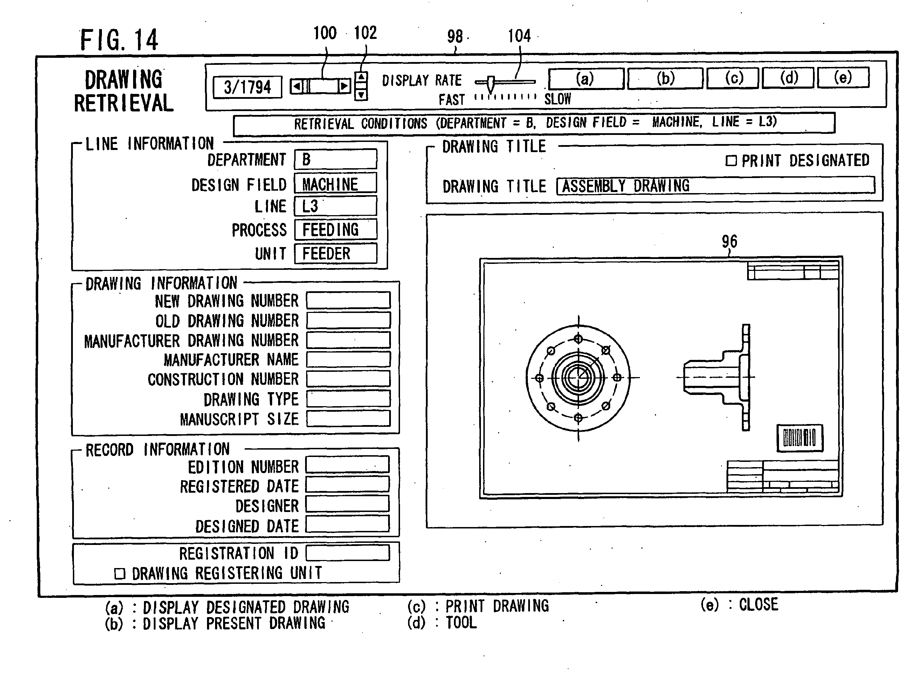

When the operator designates desired drawing data and selects a "DRAWING VIEWER" button, the retrieved drawing displaying means 68 requests the drawing information storing unit 16 for the compressed drawing image data Dcom of the designated drawing data in step S25. The drawing information storing unit 16 reads the requested compressed drawing image data Dcom from the data memory 34, and sends the read compressed drawing image data Dcom to the drawing retrieving unit 20. As shown in FIG. 14, the drawing retrieving unit 20 displays a compressed drawing 96 based on the compressed drawing image data Dcom and the drawing attribute data Datt thereof on a drawing retrieval result screen 98 in step S26.

Because the compressed drawing 96 displayed on the drawing retrieval result screen 98 is based on the compressed drawing image data Dcom, transmitted from the data memory 34, whose amount of data is much smaller than the actual drawing image data Dorg, the time required to display the compressed drawing 96 may be extremely short. The drawing retrieval result screen 98 includes a title text box for displaying a drawing title as drawing attribute data Datt, the operator can recognize the contents of the displayed compressed drawing 96 from the displayed drawing title even if the operator finds the displayed compressed drawing 96 hard to discriminate.

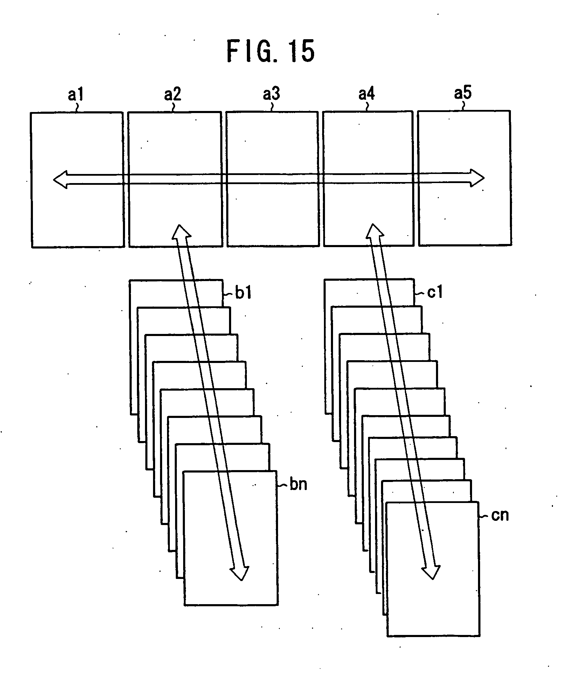

The drawing retrieval result screen 98 also includes a horizontal scroll bar 100 and a vertical scroll bar 102. If a plurality of drawing data are selected on the drawing retrieval result screen 94 shown in FIG. 13, then when the operator clicks the horizontal scroll bar 100, the drawing attribute data Datt of the selected drawing data and their compressed drawings 96 are successively scrolled in display in the order of compressed drawings a1, a1, ..., a5 shown in FIG. 15. Since the amount of data of each of the compressed drawings 96 is small, the compressed drawings 96 can be displayed without delay.

When the operator holds down the pointer on the horizontal scroll bar 100 or the vertical scroll bar 102, the compressed drawings 96 are continuously scrolled in display. When the operator clicks a rate setting bar 104 on the drawing retrieval result screen 94, the scrolling rate can be adjusted as desired.

The vertical scroll bar 102 is used to scroll a plurality of drawings 30 which are presented as a bundle of drawings, such as circuit drawings or inspection documents as shown in FIG. 11. Specifically, if two or more drawings are set as drawing data on the drawing retrieval result screen 94 shown in FIG. 13, then the drawing retrieval result screen 98 displays the cover sheet 90 (see FIG. 11) as the compressed drawing 96. If the compressed drawing 96 is the compressed drawing a2 or a4 in FIG. 15, then when the operator clicks the vertical scroll bar 102, the displayed drawing attribute data Datt except the drawing titles remains unchanged, but the drawing titles and the compressed drawings 96 are scrolled in display in the order of compressed drawings b1, b2, ..., bn or compressed drawings c1, c2, ..., cn in step S27.

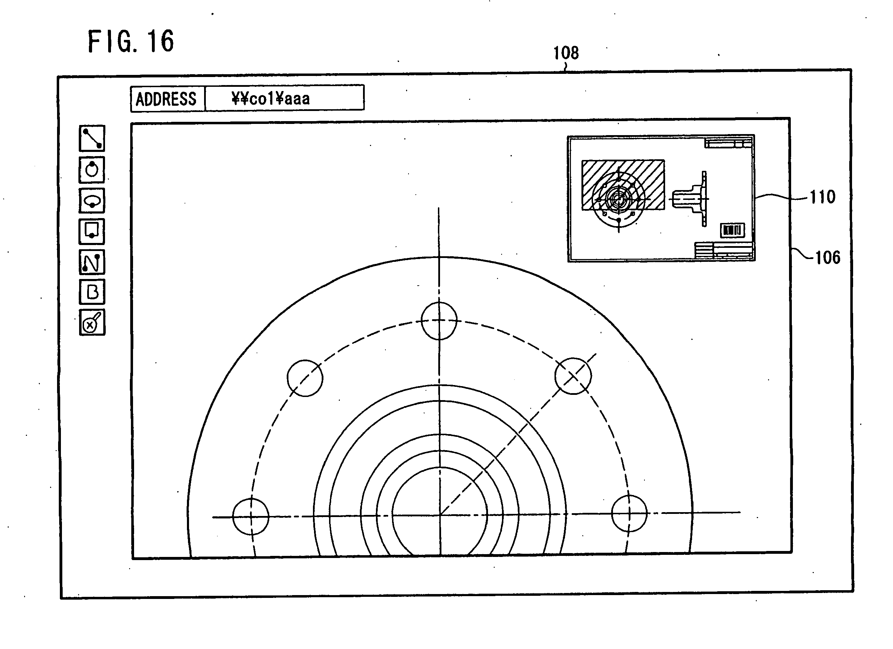

After the operator detects a desired drawing 30 by successively displaying the compressed drawings 96, the operator selects a "DISPLAY DESIGNATED DRAWING" button on the drawing retrieval result screen 98 in step S28. The selected drawing displaying means 70 requests the drawing information storing unit 16 for the actual drawing image data Dorg of the displayed drawing data in step S29. The drawing information storing unit 16 reads the requested actual drawing image data Dorg from the data memory 34, and sends the read actual drawing image data Dorg to the drawing retrieving unit 20. As shown in FIG. 16, the drawing retrieving unit 20 displays an uncompressed actual drawing 106 based on the actual drawing image data Dorg that has been sent on a drawing retrieval result screen 108 in step S30.

Since the actual drawing 106 displayed on the drawing retrieval result screen 108 is based on the uncompressed actual drawing image data Dorg transmitted from the data memory 34, the time required to display the actual drawing 106 is longer than the time required to display the compressed drawing 96. However, the time required to display the actual drawing 106 poses no significant problem because only one drawing is specified as the actual drawing 106. On the drawing retrieval result screen 108, an overall display compressed screen 110 indicating the displayed area is also displayed in combination with the actual drawing 106, so that even if the actual drawing 106 cannot be displayed in its entirety at one time on the monitor, the operator can easily confirm the position of the displayed actual drawing 106 relative to the overall drawing.

The operator confirms the displayed actual drawing 106. If the displayed actual drawing 106 is the desired drawing 30, then the operator selects a print process to output the drawing 30 from the output unit 24B in step S31.

A process of retrieving a complete report will be described below. A complete report refers to a file of drawings 30 including design drawings, inspection documents, estimation documents, etc. with respect to a certain job, e.g., a construction work for a facility.

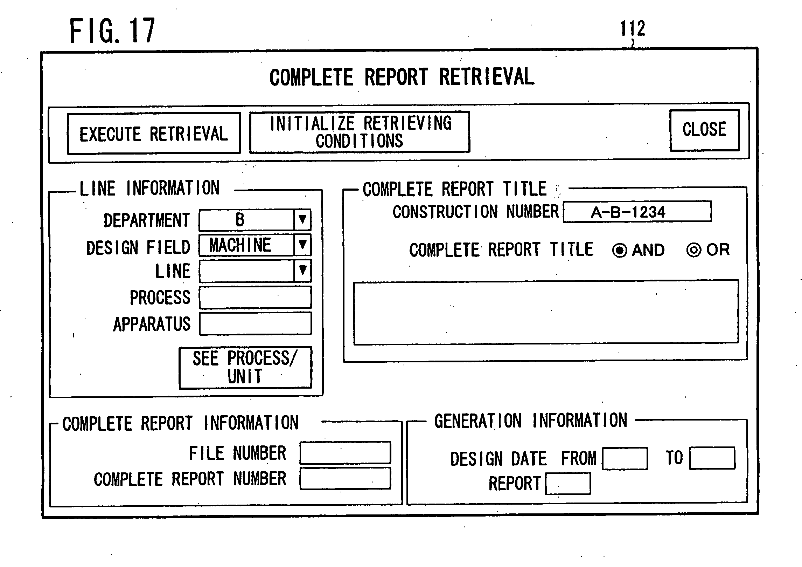

The operator selects a "RETRIEVE COMPLETE REPORT" button for retrieving a complete report on the menu screen 80 shown in FIG. 5. The monitor displays a retrieval condition input screen 112 shown in FIG. 17. The operator retrieves a desired construction work on the retrieval condition input screen 112. For example, if a construction number (see FIG. 8) is set as drawing attribute data Datt when a drawing 30 is to be registered, then all drawing attribute data Datt which have the same construction number can be retrieved as related to the same construction work.

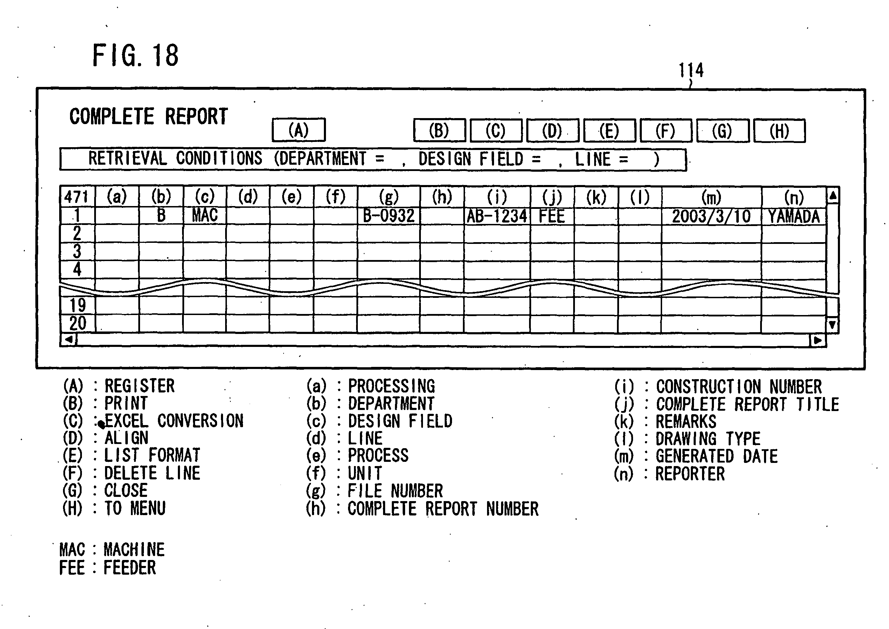

Using drawing attribute data Datt input on the retrieval condition input screen 112, the complete report retrieving means 74 retrieves a complete report having a corresponding construction number, and displays a complete report list display screen 114 shown in FIG. 18. The operator selects a desired complete report based on complete report titles as construction titles displayed on the complete report list display screen 114, thereby extracting a related drawing 30. If necessary, all the drawings 30 of the desired complete report may be output from the output unit 24B.

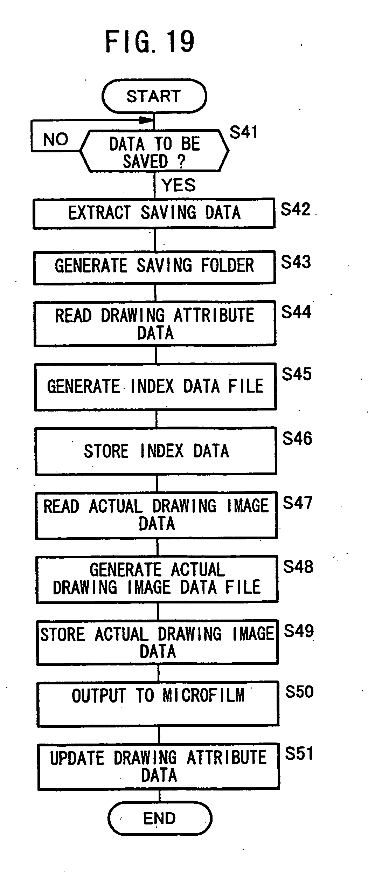

A process of saving actual drawing image data Dorg and drawing attribute data Datt saved in data memory 34 on a microfilm 50 will be described below with reference to a flowchart shown in FIG. 19.

If the drawing saving unit 18 is instructed to save image data of document images such as inspection documents, calculation documents, estimation documents and drawings, stored in the data memory 34, on a microfilm 50 in step S41, the data extracting means 52 extracts saving data to be saved on the microfilm 50 from the data memory 34 using the drawing retrieving function of the drawing retrieving unit 20 in step S42. For example, based on retrieval conditions input on the retrieval condition input screen 92 shown in FIG. 12, the data extracting means 52 extracts saving data with respect to which the MF storage flag indicating that data are saved on a microfilm 50 has not been set. FIG. 13 shows the drawing retrieval result screen 94 which displays extracted saving data.

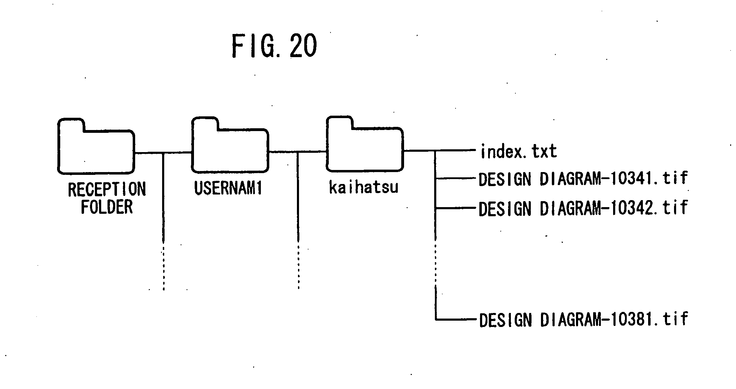

Then, the data extracting means 52 generates a saving folder configured as shown in FIG. 20 in the archive data storing means 53, according to the extracted saving data in step S43. Specifically, the saving folder is generated as a hierarchical folder system including a reception folder in the archive data storing means 53, a low-level folder (e.g., entitled as "USERNAM1") having a job group ID set as a retrieval condition, and a further low-level folder (e.g., entitled "kaihatsu") having a job ID set as a retrieval condition.

After the saving folder is generated, drawing attribute data Datt identified by the extracted saving data are read from the data memory 34 in step S44. The read drawing attribute data Datt are converted into text data, from which an index data file is generated in step S45. For example, the drawing attribute data Datt are converted from the Excel data shown in FIG. 13 into CSV data. The index data file of text data, to which a file name "index.txt" is assigned, is stored in the folder "kaihatsu".

The data extracting means 52 reads actual drawing image data Dorg corresponding to the extracted drawing attribute data Datt from the data memory 34 in step S47, and generates an actual drawing image data file from the actual drawing image data Dorg in step S48. For example, image file names "DESIGN DRAWING-10341.tif", "DESIGN DRAWING-10342.tif", ..., "DESIGN DRAWING-10381.tif" are assigned to respective actual drawing image data Dorg, and the actual drawing image data Dorg with these image file names are stored in the folder "kaihatsu" in step S49 together with the index data file.

After all the extracted saving data are stored in the archive data storing means 53, the film output means 54 in the form of a CD-ROM outputs and saves these saving data in each folder having a job ID on a microfilm 50 in step S50.

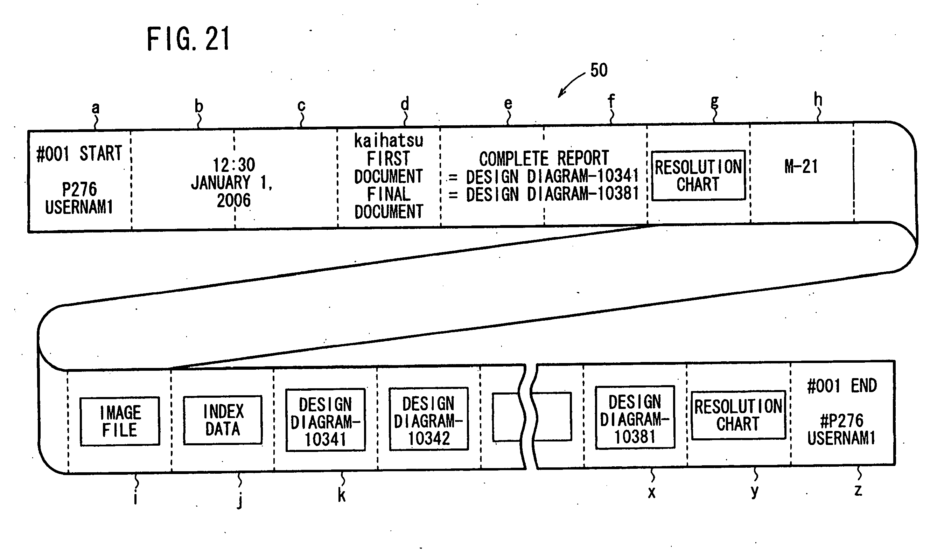

FIG. 21 shows the saving data output to and recorded on the microfilm 50. The microfilm 50 has a succession of recording frames "a" through "z". The first recording frame "a" at the start of the microfilm 50 records therein information as to a production lot number (P276) identifying the drawing saving unit 18 and the job group ID (USERNAM1). The next recording frames "b", "c" record therein information as to year, month, date, and time at which the saving data are output to the microfilm 50. The recording frames "d" through "f" record therein information as to the job ID (kaihatsu) and titles and contents of the saving data recorded on the microfilm 50. The recording frame "g" records therein a resolution chart for confirming image capturing conditions under which the saving data are captured on the microfilm 50. The recording frame "h" records therein a film number (M-21) of the microfilm 50. The recording frame "i" records therein the image file names "DESIGN DRAWING-10341.tif", etc. of the respective actual drawing image data Dorg as the saving data, the image file names being recorded as text data. The recording frame "j" records therein index data of the drawing attribute data Datt in a visualized code format. The recording frames "k" through "x" record therein drawing images based on the actual drawing image data Dorg. The recording frame "y" records therein the same resolution chart as the one recorded in the recording frame "g". The recording frame "z" at the end of the microfilm 50 records therein the information as to the production lot number (P276) and the job group ID (USERNAM1).

After the film output means 54 outputs the saving data on the microfilm 50, the attribute data editing means 56 updates the drawing attribute data Datt shown in FIG. 13 in step S51. Specifically, the attribute data editing means 56 checks the MF storage flag as MF-stored and inputs the film number recorded in the recording frame "h" into the MF number column. The updated drawing attribute data Datt are stored in the data memories 32, 34.

A restoring process that is performed to restore the recorded data from the microfilm 50 when the data stored in the data memories 32, 34 cannot be read will be described below.

The microfilm 50 with desired data recorded thereon as shown in FIG. 21 is set in the film scanner 57 of the drawing restoring unit 19, and the recorded information is read from the microfilm 50 by the film scanner 57. The contents of the information recorded on the microfilm 50 can generally be recognized from the titles recorded in the recording frames "d" through "f".

Of the information read by the film scanner 57, the index data in the recording frame "j" are recorded as visualized text data representing the drawing attribute data Datt. The image processing means 59 processes the index data for edge emphasis, noise removal, etc. Then, the data restoring means 61 analyzes and converts the processed index data into text data, and restores the drawing attribute data Datt from the text data. The image information recorded on the microfilm 50 is processed by the image processing means 59 and thereafter restored as actual drawing image data Dorg.

As described above, the actual drawing image data Dorg and the drawing attribute data Datt representative of attributes of the actual drawing image data Dorg can fully be restored from the microfilm 50 to reconstruct the drawing database. All the necessary drawings 30 can be stored on the microfilm 50 for a long period of time. Therefore, drawings on sheets of paper can be discarded, and image data and related attribute data can fully be restored at any time from microfilms without concern over changes in data formats and operating systems.

## Claims

1. An apparatus for backing up data in a data management system for managing image data in a manner to allow the image data to be retrieved according to attribute data related thereto, **characterized by**:
data extracting means (52) for extracting image data (Dorg) to be backed up from image data (Dorg) stored in an image data memory (34), and extracting attribute data (Datt) related to said image data (Dorg) to be backed up from attribute data (Datt) stored in an attribute data memory (34), said attribute data being data defining the department, design field, line, process, unit, new drawing number, old drawing number, edition, manufacturer drawing number, manufacturer name, construction number, drawing type, drawing title, remarks, person in charge, generation date, designer, number of drawings, drawing size, storage location, shelf number, drawing registering unit input flag, drawing generating unit registration flag, microfilm storage flag, microfilm number, registration ID, design date, updating date, discarded date, or registration date for a drawing; and
data recording means (54) for recording a drawing image on a microfilm (50) based on said image data (Dorg) extracted by said data extracting means (52), and recording said attribute data (Datt) extracted by said data extracting means (52) as text data, from which the attribute data (Datt) is restorable, on said microfilm (50);
wherein said data extracting means (52) is operable to extract image data (Dorg) when the microfilm storage flag is not set in the attribute data relating to said image data (Dorg), said microfilm storage flag indicating that said image data (Dorg) is saved on said microfilm (50).

2. An apparatus according to claim 1, further comprising
attribute data editing means (56) for editing said attribute data (Datt) related to said image data (Dorg) recorded on said microfilm (50).

3. An apparatus according to claim 2, wherein said attribute data editing means (56) is operable to edit the microfilm storage flag indicating that said image data (Dorg) is saved on said microfilm (50).

4. An apparatus according to claim 1, further comprising
archive data storing means (53) for storing, as archive data, said image data (Dorg) and said attribute data (Datt) which are recorded on said microfilm (50).

5. A method of backing up data in a data management system for managing image data in a manner to allow the image data to be retrieved according to attribute data related thereto, the method **characterized by**:
a data extracting step of extracting image data (Dorg) to be backed up from image data (Dorg) stored in an image data memory (34), and extracting attribute data (Datt) related to said image data (Dorg) to be backed up from attribute data (Datt) stored in an attribute data memory (34), said attribute data being data defining the department, design field, line, process, unit, new drawing number, old drawing number, edition, manufacturer drawing number, manufacturer name, construction number, drawing type, drawing title, remarks, person in charge, generation date, designer, number of drawings, drawing size, storage location, shelf number, drawing registering unit input flag, drawing generating unit registration flag, microfilm storage flag, microfilm number, registration ID, design date, updating date, discarded date, or registration date for a drawing; and
a data recording step of recording a drawing image on a microfilm (50) based on said image data (Dorg) extracted in said data extracting step, and recording said attribute data (Datt) extracted in said data extracting step as text data, from which the attribute data (Datt) is restorable, on said microfilm (50);
wherein said data extracting step extracts image data (Dorg) when the microfilm storage flag is not set in the attribute data relating to said image data (Dorg), said microfilm storage flag indicating that said image data (Dorg) is saved on said microfilm (50).

6. A method according to claim 5, further comprising
an attribute data editing step of editing said attribute data (Datt) related to said image data (Dorg) recorded on said microfilm (50).

7. A method according to claim 6, wherein said attribute data editing step edits the microfilm storage flag indicating that said image data (Dorg) is saved on said microfilm (50).

8. A method according to claim 5, further comprising
an archive data storing step of storing, as archive data, said image data (Dorg) and said attribute data (Datt) which are recorded on said microfilm (50).

## Patentansprüche

1. Vorrichtung zur Datensicherung in einem Daten-Managementsystem zum Verwalten von Bilddaten in einer Weise, um ein Wiedergewinnen von Bilddaten anhand von darauf bezogenen Attributdaten zu gestatten, **gekennzeichnet durch**:
Datenextraktionsmittel (52) zum Extrahieren von zu sichernden Bilddaten (Dorg) aus in einem Bilddatenspeicher (34) gespeicherten Bilddaten (Dorg), und Extrahieren von zu sichernden Attributdaten (Datt), die sich auf die Bilddaten (Dorg) beziehen, aus in einem Attributdatenspeicher (34) gespeicherten Attributdaten (Datt), wobei die Attributdaten Abteilung, Design-Gebiet, Linie, Prozess, Einheit, neue Zeichnungsnummer, alte Zeichnungsnummer, Ausgabe, Herstellerzeichnungsnummer, Herstellername, Konstruktionsnummer, Zeichnungstyp, Zeichnungstitel, Anmerkungen, verantwortliche Person, Erzeugungsdatum, Designer, Anzahl von Zeichnungen, Zeichnungsgröße, Speicherort, Regalnummer, Zeichenregistrierungseinheitseingabeflag, Zeichenerzeugungseinheit-Registrierungsflag, Mikrofilmspeicherflag, Mikrofilmnummer, Registrierungs-ID, Entwurfsdatum, Aktualisierungsdatum, Verwerfsdatum, oder Registrierungsdatum für eine Zeichnung, definieren; und
Datenaufzeichnungsmittel (54) zum Aufzeichnen eines Zeichnungsbildes auf einen Mikrofilm (50), basierend auf den von dem Daten-Extraktionsmittel (52) extrahierten Bilddaten (Dorg), und zum Aufzeichnen der von dem Daten-Extraktionsmittel (52) extrahierten Attributdaten als Textdaten, aus denen die Attributdaten (Datt) wiederherstellbar sind, auf dem Mikrofilm (50);
wobei das Daten-Extraktionsmittel (52) betreibbar ist, Bilddaten (Dorg) zu extrahieren, wenn das Mikrofilm-Speicherflag in den sich auf die Bilddaten (Dorg) beziehenden Attributdaten nicht gesetzt ist, wobei das Mikrofilm-Speicherflag anzeigt, dass die Bilddaten (Dorg) auf dem Mikrofilm (50) gespeichert sind.

2. Vorrichtung gemäß Anspruch 1, weiterhin umfassend Attributdaten-Editiermittel (56) zum Editieren der Attributdaten (Datt), die sich auf die auf dem Mikrofilm aufgezeichneten Bilddaten (Dorg) beziehen.

3. Vorrichtung gemäß Anspruch 2, wobei das Attributdaten-Editiermittel (56) dafür betreibbar ist, das Mikrofilm-Speicherflag zu editieren, welches anzeigt, dass die Bilddaten (Dorg) auf dem Mikrofilm (50) gesichert sind.

4. Vorrichtung gemäß Anspruch 1, weiterhin umfassend Archivdatenspeichermittel (53) zum Speichern -als Archivdaten- der Bilddaten (Dorg) und der Attributdaten (Datt), die auf dem Mikrofilm (50) aufgezeichnet sind.

5. Verfahren zum Aktualisieren in einem Datenverwaltungssystem zur Verwaltung von Bilddaten in einer Weise, die es gestattet, dass die Bilddaten gemäß Attributdaten, die sich darauf beziehen, wieder gewonnen werden, wobei das Verfahren **gekennzeichnet ist durch**:
einen Datenextraktionsschritt des Extrahierens von zu sichernden Bilddaten (Dorg) aus in einem Bilddatenspeicher (34) gespeicherten Bilddaten (Dorg), und Extrahierens von zu sichernden Attributdaten (Datt), die sich auf die Bilddaten (Dorg) beziehen, aus in einem Attributdatenspeicher (34) gespeicherten Attributdaten (Datt), wobei die Attributdaten Abteilung, Design-Gebiet, Linie, Prozess, Einheit, neue Zeichnungsnummer, alte Zeichnungsnummer, Ausgabe, Herstellerzeichnungsnummer, Herstellername, Konstruktionsnummer, Zeichnungstyp, Zeichnungstitel, Anmerkungen, verantwortliche Person, Erzeugungsdatum, Designer, Anzahl von Zeichnungen, Zeichnungsgröße, Speicherort, Regalnummer, Zeichenregistrierungseinheitseingabeflag, Zeichenerzeugungseinheit-Registrierungsflag, Mikrofilmspeicherflag, Mikrofilmnummer, Registrierungs-ID, Entwurfsdatum, Aktualisierungsdatum, Verwerfsdatum, oder Registrierungsdatum für eine Zeichnung, definieren; und
einen Datenaufzeichnungsschritt des Aufzeichnens eines Zeichnungsbildes auf einen Mikrofilm (50), basierend auf den von dem Daten-Extraktionsmittel (52) extrahierten Bilddaten (Dorg), und zum Aufzeichnen der von dem Daten-Extraktionsmittel (52) extrahierten Attributdaten als Textdaten, aus denen die Attributdaten (Datt) wiederherstellbar sind, auf dem Mikrofilm (50);
wobei der Daten-Extraktionsschritt Bilddaten (Dorg) extrahiert, wenn das Mikrofilm-Speicherflag in den sich auf die Bilddaten (Dorg) beziehenden Attributdaten nicht gesetzt ist, wobei das Mikrofilm-Speicherflag anzeigt, dass die Bilddaten (Dorg) auf dem Mikrofilm (50) gespeichert sind.

6. Verfahren gemäß Anspruch 5, weiterhin umfassend einen Attributdaten-Editierschritt des Editierens der Attributdaten (Datt), die sich auf die auf dem Mikrofilm aufgezeichneten Bilddaten (Dorg) beziehen.

7. Verfahren gemäß Anspruch 6, wobei der Attributdaten-Editierschritt das Mikrofilm-Speicherflag editiert, welches anzeigt, dass die Bilddaten (Dorg) auf dem Mikrofilm (50) gesichert sind.

8. Verfahren gemäß Anspruch 5, weiterhin umfassend einen Archivdatenspeicherschritt des Speicherns -als Archivdaten- der Bilddaten (Dorg) und der Attributdaten (Datt), die auf dem Mikrofilm (50) aufgezeichnet sind.

## Revendications

1. Appareil pour sauvegarder des données dans un système de gestion de données pour gérer des données d'image de façon à permettre aux données d'image d'être retrouvées selon des données d'attribut liées à ces dernières, **caractérisé par** :
un moyen d'extraction de données (52) pour extraire des données d'image (Dorg) à sauvegarder à partir de données d'image (Dorg) stockées dans une mémoire de données d'image (34), et pour extraire des données d'attribut (Datt) liées auxdites données d'image (Dorg) à sauvegarder à partir de données d'attribut (Datt) stockées dans une mémoire de données d'attribut (34), lesdites données d'attribut étant des données définissant le département, le domaine de conception, la ligne, le processus, l'unité, le nouveau numéro de dessin, l'ancien numéro de dessin, l'édition, le numéro de dessin de fabricant, le nom de fabricant, le numéro de construction, le type de dessin, le titre de dessin, les remarques, la personne responsable, la date de production, le concepteur, le nombre de dessins, la taille de dessin, l'emplacement de stockage, le numéro d'étagère, l'indicateur d'entrée d'unité d'enregistrement de dessin, l'indicateur d'enregistrement d'unité de production de dessin, l'indicateur de stockage de microfilm, le numéro de microfilm, l'ID d'enregistrement, la date de conception, la date de mise à jour, la date de rejet, ou la date d'enregistrement pour un dessin ; et
un moyen d'enregistrement de données (54) pour enregistrer une image de dessin sur un microfilm (50) en se basant sur lesdites données d'image (Dorg) extraites par ledit moyen d'extraction de données (52), et pour enregistrer lesdites données d'attribut (Datt) extraites par ledit moyen d'extraction de données (52) en tant que données de texte, à partir desquelles les données d'attribut (Datt) peuvent être récupérées, sur ledit microfilm (50) ;
dans lequel ledit moyen d'extraction de données (52) peut être mis en oeuvre pour extraire des données d'image (Dorg) lorsque l'indicateur de stockage de microfilm n'est pas mis à un dans les données d'attribut se rapportant auxdites données d'image (Dorg), ledit indicateur de stockage de microfilm indiquant que lesdites données d'image (Dorg) sont sauvegardées sur ledit microfilm (50).

2. Appareil selon la revendication 1, comprenant en outre
un moyen d'édition de données d'attribut (56) pour éditer lesdites données d'attribut (Datt) liées auxdites données d'image (Dorg) enregistrées sur ledit microfilm (50).

3. Appareil selon la revendication 2, dans lequel ledit moyen d'édition de données d'attribut (56) peut être mis en oeuvre pour éditer l'indicateur de stockage de microfilm indiquant que lesdites données d'image (Dorg) sont sauvegardées sur ledit microfilm (50).

4. Appareil selon la revendication 1, comprenant en outre
un moyen de stockage de données d'archive (53) pour stocker, en tant que données d'archive, lesdites données d'image (Dorg) et lesdites données d'attribut (Datt) qui sont enregistrées sur ledit microfilm (50).

5. Procédé de sauvegarde de données dans un système de gestion de données pour gérer des données d'image de façon à permettre aux données d'image d'être retrouvées selon des données d'attribut liées à ces dernières, le procédé étant **caractérisé par** :
une étape d'extraction de données consistant à extraire des données d'image (Dorg) à sauvegarder à partir de données d'image (Dorg) stockées dans une mémoire de données d'image (34), et à extraire des données d'attribut (Datt) liées auxdites données d'image (Dorg) à sauvegarder à partir de données d'attribut (Datt) stockées dans une mémoire de données d'attribut (34), lesdites données d'attribut étant des données définissant le département, le domaine de conception, la ligne, le processus, l'unité, le nouveau numéro de dessin, l'ancien numéro de dessin, l'édition, le numéro de dessin de fabricant, le nom de fabricant, le numéro de construction, le type de dessin, le titre de dessin, les remarques, la personne responsable, la date de production, le concepteur, le nombre de dessins, la taille de dessin, l'emplacement de stockage, le numéro d'étagère, l'indicateur d'entrée d'unité d'enregistrement de dessin, l'indicateur d'enregistrement d'unité de production de dessin, l'indicateur de stockage de microfilm, le numéro de microfilm, l'ID d'enregistrement, la date de conception, la date de mise à jour, la date de rejet, ou la date d'enregistrement pour un dessin ; et
une étape d'enregistrement de données consistant à enregistrer une image de dessin sur un microfilm (50) en se basant sur lesdites données d'image (Dorg) extraites dans ladite étape d'extraction de données, et à enregistrer lesdites données d'attribut (Datt) extraites dans ladite étape d'extraction de données en tant que données de texte, à partir desquelles les données d'attribut (Datt) peuvent être retrouvées, sur ledit microfilm (50) ;
dans lequel ladite étape d'extraction de données extrait des données d'image (Dorg) lorsque l'indicateur de stockage de microfilm n'est pas mis à un dans les données d'attribut se rapportant auxdites données d'image (Dorg), ledit indicateur de stockage de microfilm indiquant que lesdites données d'image (Dorg) sont sauvegardées sur ledit microfilm (50).

6. Procédé selon la revendication 5, comprenant en outre
une étape d'édition de données d'attribut consistant à éditer lesdites données d'attribut (Datt) liées auxdites données d'image (Dorg) enregistrées sur ledit microfilm (50).

7. Procédé selon la revendication 6, dans lequel ladite étape d'édition de données d'attribut édite l'indicateur de stockage de microfilm indiquant que lesdites données d'image (Dorg) sont sauvegardées sur ledit microfilm (50).

8. Procédé selon la revendication 5, comprenant en outre
une étape de stockage de données d'archive consistant à stocker, en tant que données d'archive, lesdites données d'image (Dorg) et lesdites données d'attribut (Datt) qui sont enregistrées sur ledit microfilm (50).
